# EUROPÄISCHE PATENTSCHRIFT

(11) **EP 2 611 580 B1**
(45) Veröffentlichungstag und Bekanntmachung des Hinweises auf die Patenterteilung: **16.07.2014**
(21) Anmeldenummer: 11766954.9
(22) Anmeldetag: 29.09.2011
(51) Int. Cl.: B25H 1/00, B23Q 16/00, B23Q 16/02, B23Q 16/06

(54) **DREHTELLER MIT INDEXIEREINHEIT UND BETRIEBSVERFAHREN**
TURNTABLE WITH INDEXING UNIT AND OPERATING METHOD
PLATEAU TOURNANT DOTÉ D'UNE UNITÉ D'INDEXAGE, ET PROCÉDÉ DE FONCTIONNEMENT

(30) Priorität: 06.10.2010 DE 102010042086
(43) Veröffentlichungstag der Anmeldung: 10.07.2013
(73) Patentinhaber: Siemens Aktiengesellschaft, 80333 München (DE)
(72) Erfinder: KAUSSLER, Johann, 92521 Schwarzenfeld (DE)
(86) Internationale Anmeldenummer: PCT/EP2011/066985
(87) Internationale Veröffentlichungsnummer: WO 2012/045655

(56) Entgegenhaltungen:
- WO-A1-2008/119509
- FR-A1- 2 538 286
- US-A- 3 581 602

## Beschreibung

Die Erfindung betrifft allgemein Montagefördersysteme. Diese bestehen meist aus verschiedenen Funktionsbereichen wie dem Transport von Werkstücken, der wiederholgenauen Positionierung von Werkstücken, verschiedenen auf die Bauteile angewendete Bearbeitungsverfahren sowie den Einsatz entsprechender Sensoren und damit verbundener Datenverarbeitung.

Drehteller werden mit hoher Wirtschaftlichkeit bei der Montage von Einzelstücken zu komplexen Bauteilen eingesetzt. Die Montage besteht hierbei aus unterschiedlichen und zahlreichen Einzelschritten zur Bearbeitung von Bauteilen und zu deren Zusammenfügung.

In der Regel werden die Drehteller mit Bauteilen bestückt und unterschiedlichen Arbeitsstationen sukzessive zugeführt. Dabei können einzelne Vorgänge automatisiert werden.

Zur genauen und wiederholten Positionierung von Werkstücken ist eine so genannte Indizierung oder Indexierung vorgesehen. Damit ist allgemein die Justierung von Werkstücken an einer vorgegebenen wiederholgenauen Position gemeint.

Bekannt sind bisher Drehteller, deren Drehbewegung automatisch betrieben wird. Da bei der Montage von Bauteilsystemen, die auf Drehtellern bewerkstelligt werden, sehr komplexe Arbeitsvorgänge ausgeführt werden, ist eine umfangreiche Kontrolle dieser Vorgänge hinsichtlich der optimalen Ausführung wünschenswert. Darüber hinaus sind Bearbeitungsvorgänge möglich, deren Automatisierung große Schwierigkeiten bereitet.

Die US 3,581,602 offenbart einen Drehteller zur Aufnahme, zum Transport und zur Fixierung von Bauteilen (22), aufweisend folgende Elemente:
- mindestens einen drehbar gelagerten Auflageteller mit Freilauf und mit mindestens einer Kurvenrolle,
- mindestens eine Indexiereinheit zur automatischen Aufnahme und Zentrierung der mindestens einen Kurvenrolle, wobei eine Teilung auf dem Auflageteller durch Kurvenrollen markiert ist, so dass dieser in gleichmäßige Segmente unterteilt ist und über die mindestens eine Kurvenrolle mit der Indexiereinheit zusammenwirkt und nach Bearbeitung der Bauteile an einem entsprechenden Arbeitssystem für die nächste Drehbewegung freigegeben ist.

Der Erfindung liegt die Aufgabe zugrunde, eine optimale ergonomische Auslegung sowie Betriebsweise eines Drehtellers an einer Arbeitsstation bereitzustellen, sodass der Ablauf automatischer und manueller Operationen verbessert wird.

Die Lösung dieser Aufgabe geschieht durch die jeweilige Merkmalskombination der unabhängig formulierten Patentansprüche.

Der Erfindung liegt die Erkenntnis zugrunde, dass mithilfe eines Drehtellers, der zur Montage und Förderung von Bauteilen ausgestattet ist, durch den Einsatz eines Freilaufes für den Drehteller sowie die Ausstattung mit Kurvenrollen, die ihrerseits mit einer Indexiereinheit zur exakten Positionierung einer Kurvenrolle bzw. des Drehtellers zusammenwirken, eine optimale Abfolge von automatischen und manuellen Operationen erreicht werden kann. Die Teilung auf einem Drehteller wird durch die Verteilung der fest mit dem Drehteller verbundenen Kurvenrollen gekennzeichnet. Durch die Indexiereinheit wird in der Regel eine Kurvenrolle an einer bestimmten Teilung, die einer entsprechenden Bearbeitung entspricht, in der Indexiereinheit aufgenommen, gedämpft und zentriert. Dazu ist in der Drehtellerlagerung ein Freilauf vorgegeben, der eine Drehtellerbewegung nach dem Einfahren in die Dämpfung entgegen der Drehbewegung verhindert.

Nach der Bearbeitung an einer derart indexierten Position des Drehtellers und entsprechend der darauf befindlichen Bauteile wird die Kurvenrolle innerhalb der Indexiereinheit freigegeben, sodass der Drehteller zu einer weiteren Drehung um eine Teilung mit darauf folgender erneuter Positionierung der folgenden Kurvenrolle initiierbar ist. Dabei wird eine in die Indexiereinheit einfahrende Kurvenrolle sanft indexiert, d. h. gebremst und zentriert.

Eine weitere vorteilhafte Ausgestaltung bezieht sich auf die gemeinsame Montage des Drehtellers mit Freilauf und Indexiereinheit auf einem gemeinsamen Träger, derart, dass bei einer Drehung des Drehtellers Kurvenrollen mit der Indexiereinheit zusammenwirken. Um nicht zusätzlichen technischen Aufwand betreiben zu müssen, ist es vorteilhaft, die Drehachse des Drehtellers senkrecht auszurichten.

Die der Erfindung zugrunde liegende Aufgabe wird weiterhin durch ein Verfahren gelöst, welches ausgelegt ist zur Aufnahme, zum Transport und zur Fixierung von Bauteilen auf mindestens einem Drehteller. Dadurch wird der Drehteller derart initiiert, dass er von einer Arbeitsposition zur nächsten weiterdreht. Der Antrieb kann durch einen Motor unterstützt werden.

Es ist vorteilhaft, den Drehteller in Abhängigkeit von anstehenden Arbeitsprozessen zur optimalen Zeit weiterzudrehen, bzw. zur Weiterdrehung zu initiieren. Nach der weiteren Drehung entsprechend einer Teilung auf dem Drehteller fährt die nächste Kurvenrolle gegen einen Anschlag der Indexiereinheit. Der Anschlag ist in tangentialer Richtung zum Drehteller federunterstützt gelagert und kann vorteilhaft zur Dämpfung verwendet werden, indem ein Dämpfungselement als Basis für den Anschlag benutzt wird.

Durch den Einsatz eines Freilaufs in Verbindung mit dem Drehteller wird beim Abbremsen einer Kurvenrolle beim Einlauf in die Indexiereinheit verhindert, dass sich der Drehteller unter Umständen zurückdreht. Mithilfe eines Zentrierelementes, welches kolbenunterstützt radial zu dem Drehteller, beidseitig zu der aktuell in der Indexiereinheit befindlichen Kurvenrolle ein- und ausfahrbar ist, wird die Kurvenrolle zentriert. In diesem Zustand befinden sich die auf der Oberfläche in Aufnahmeeinheiten eingesetzten Bauteile exakt an einer Arbeitsstation, bzw. in einer gewünschten Arbeitsposition.

Das Zusammensetzen von Bauteilen sowie deren Zusammenfügen kann vorteilhaft durch die Verwendung eines Drehtellers in Verbindung mit mehreren Arbeitsstationen, die zusammen ein Arbeitssystem bilden, ausgeführt werden. Dabei werden manuelle und automatisierte Vorgänge gemischt.

Im Folgenden werden anhand der schematischen, die Erfindung nicht einschränkenden Figuren Ausführungsbeispiele beschrieben. Die Figuren zeigen im Einzelnen:
- Figur 1: eine Teildarstellung eines Drehtellers 1, wobei eine Kurvenrolle 3 in einer Indexiereinheit 8 durch ein Zentrierelement 5 zentriert ist,
- Figur 2: eine geschnittene Seitenansicht eines Drehtellers 1 mit Lagerung und Freilauf 2 sowie Indexiereinheit 8 mit darin positionierter Kurvenrolle 3,
- Figur 3: die Aufsicht auf eine Darstellung entsprechend Figur 2, wobei der Drehteller 1 vollständig und transparent dargestellt ist,
- Figur 4: eine teilweise geschnittene Darstellung einer Indexiereinheit 8 sowie eines Teils eines Drehtellers 1,
- Figur 5: eine geschnittene Seitenansicht eines Drehtellers 1 mit gemeinsam auf einem Träger 11 positionierter Lagerung mit Freilauf 2 für den Drehteller 1 sowie eine Indexiereinheit 8 zum Zusammenwirken mit auf dem Drehteller 1 befindlichen Kurvenrollen 3,
- Figur 6: eine Darstellung entsprechend Figur 5 in der Aufsicht, wobei der Drehteller 1 teilweise gebrochen dargestellt ist und die Kurvenrolle 3 am Anschlag 4 anliegt,
- Figur 7: ein Beispiel eines Drehtellers 1 für ein hybrides Arbeitssystem 13 mit einem variabel indizierbaren Drehteller 1, welcher nach Weiterdrehung um eine Teilung erneut abgebremst und zentriert wird,
- Figur 8: jeweils drei Arbeitsstationen 12, in ihrer Gesamtheit auch als Arbeitssystem 13 bezeichnet, wobei drei Arbeitssysteme 13 nebeneinander zum Aufbau einer Montagelinie zusammengesetzt sind.

In den begleitenden Figuren wird beispielhaft ein Ausführungsbeispiel beschrieben. Der beschriebene Drehteller, der zu einer bestimmbaren Zeit in eine Drehbewegung, hier gleichzeitig eine Transportbewegung, versetzt werden kann, wird in der Endstellung der Drehbewegung, d. h. wenn er um eine Teilung weitergedreht hat, automatisch fixiert. Dadurch wird die ergonomische Gestaltung eines Arbeitssystems optimiert. Während der Drehbewegung des Drehtellers kann beispielsweise mit weiteren manuellen oder automatischen Schweiß- oder Löt-, Biege- oder ähnlichen Verfahren begonnen werden. Dies bedeutet, dass der Arbeitsgang, in dem ein Drehteller um eine Teilung weitergedreht wird, gleichzeitig in den primären Arbeitsablauf eingebunden ist und nicht in eine Vorgabezeit mit eingeht. Insgesamt wird die Produktivität erhöht und der manuelle Bewegungsablauf wird optimiert.

Die Erfindung liefert die Basis für ein hoch flexibles, hybrides Arbeitssystem. Durch die kompakte Bauweise kann ein Arbeitssystem ergonomisch optimiert werden, so dass unterschiedliche Prozesse störungsfrei ineinander greifen.

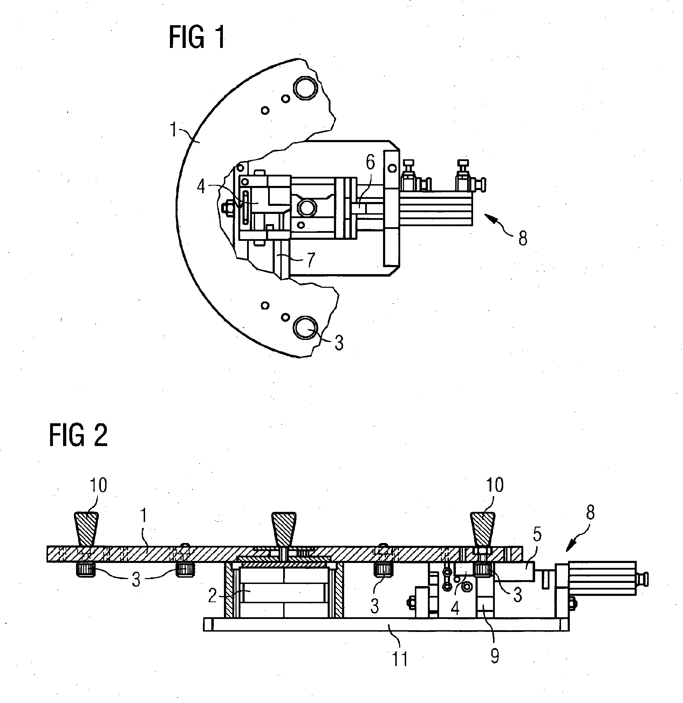

Figur 1 zeigt einen Ausschnitt des Drehtellers 1, auf dem Kurvenrollen 3 in vorgegebener Teilung über den Umfang verteilt sind. Die Darstellung entspricht etwa einer Grundstellung, in der eine Kurvenrolle 3 des Drehtellers 1 in der Indexiereinheit 8 zentriert und fixiert ist. Durch den teilweise aufgebrochen dargestellten Drehteller 1 wird die darunter liegende Indexiereinheit 8 größtenteils sichtbar. Es befinden sich ein Zentrierelement 5 sowie ein Zylinder 6, ein Anschlag 4 und ein Dämpfungselement 7 in dieser Indexiereinheit 8. Zur Überwachung des Anschlags 4 enthält die Indexiereinheit 8 einen Initiator 9.

Durch die in Figur 1 dargestellte Position des Zentrierelementes 5 wird eine Kurvenrolle 3 zentriert, fixiert und gleichzeitig der damit verbundene Drehteller positioniert. Das Zentrierelement 5 ist durch den ausgefahrenen Zylinder 6 in die entsprechend Figur 1 dargestellte Position durch radiale Verschiebung nach innen verfahren worden und greift beidseitig um die aktuelle Kurvenrolle 3.

Figur 2 zeigt eine geschnittene Seitenansicht eines drehbaren Auflagetellers, Drehteller 1 mit Kurvenrollen 3, Lagerung und Freilauf 2, Zentrierelement 5 sowie Indexiereinheit 8 und gemeinsamen Träger 11. In dem in Figur 2 dargestellten Betriebszustand ist die Kurvenrolle 3, die in die Indexiereinheit 8 eingefahren ist, nicht durch das Zentrierelement 5 zentriert und fixiert. Damit ist der Zylinder 6 (in Figur 2 nicht dargestellt) eingefahren und hat damit das Zentrierelement 5 in die dargestellte Position relativ zum Drehteller 1 radial nach außen versetzt.

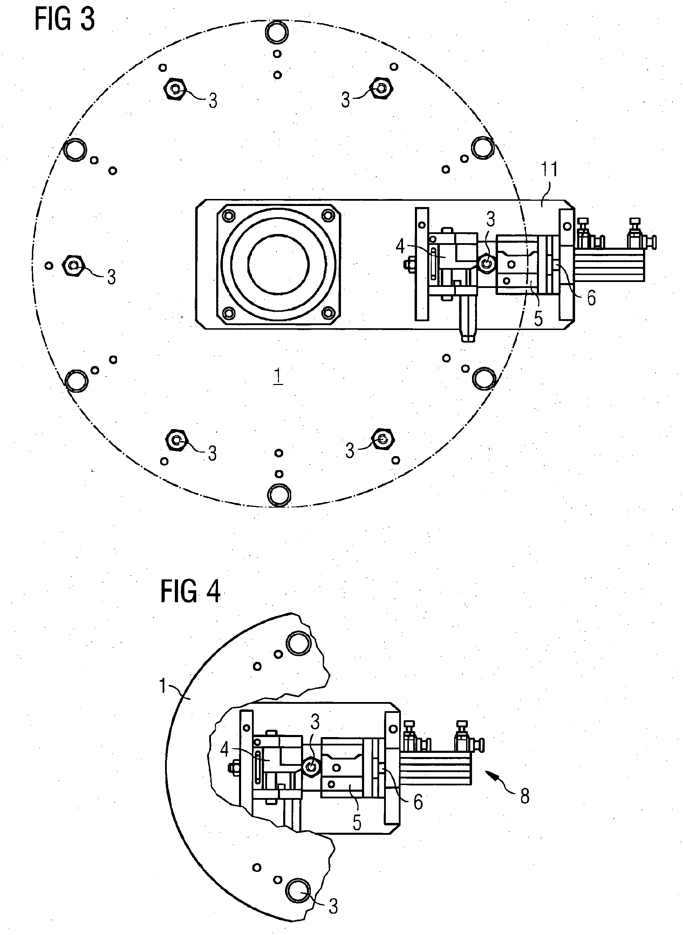

Bei gleichzeitiger Betrachtung der Figuren 2 und 3 wird deutlich, dass die in der Indexiereinheit 8 befindliche Kurvenrolle 3 freigegeben ist. In Figur 3 ist deutlich sichtbar, dass weder der Anschlag 4 noch das Zentrierelement 5 die Bahn der Kurvenrolle 3 innerhalb der Indexiereinheit 8 versperren. Somit kann durch den Betätigungsgriff 10 die Auslösung oder Initiierung einer Drehbewegung des Drehtellers 1 abgerufen werden. Wird diese Drehbewegung ausgelöst, dreht der Drehteller 1 um eine Teilung weiter, so dass die nächste Kurvenrolle 3 in die Indexiereinheit 8 einfährt.

Bei dem Start einer Drehbewegung wird jeweils eine in der Indexiereinheit 8 befindliche Kurvenrolle 3 freigegeben. Dazu ist im Normalfall der Abschluss der Bearbeitung an beispielsweise einer automatischen Arbeitsstation, an der sich der Drehteller 1 aktuell befindet, notwendig. Erst dann kann der Drehteller freigegeben und eine erneute Drehbewegung initiiert werden. Der in radialer Richtung federunterstützt gelagerte Anschlag 4 drückt im freigegebenen Zustand gegen die Kurvenrolle 3. Durch manuelles Antippen des Drehtellers 1 kann beispielsweise der Kraftschluss zwischen Anschlag 4 und Kurvenrolle 3 gelöst werden. Der Drehteller 1 dreht um eine Teilung weiter und der Anschlag 4 nimmt die nächste Kurvenrolle 3 auf, die im Anschlag 4 mittels des Dämpfungselementes 7 abgebremst wird. Der Anschlag 4 ist in tangentialer Richtung zum Drehteller 1 gelagert und wird über das Dämpfungselement 7 in Grundstellung gehalten.

Trifft die Kurvenrolle 3 auf den Anschlag 4, wird der Drehteller 1 über das Dämpfungselement 7 abgebremst. Ein Zurückdrehen des Drehtellers 1 während der Bremsphase wird durch den Freilauf 2 in der Drehtellerlagerung verhindert. Durch das Zentrierelement 5, das durch einen beispielsweise pneumatischen Zylinder/Kolben angetrieben wird, wird die Kurvenrolle 3 bzw. der Drehteller 1 zentriert. Die automatisierten Stationen beginnen zu arbeiten.

In Figur 4 ist nochmals der Betriebszustand mit freigegebener Kurvenrolle 3 verdeutlicht. Der Zylinder 6 zum Ein- und Ausfahren des Zentrierelements 5 ist eingefahren und hat somit das Zentrierelement 5 aus der Umlaufbahn der Kurvenrolle 3 entfernt. Ähnliches gilt für den Anschlag 4, der in Figur 4 jetzt nicht formflüssig mit der Kurvenrolle 3 zusammenwirkt. In diesem Zustand kann durch Initiierung, beispielsweise mittels des Betätigungsgriffes 10, der Drehteller 1 für die nächste Drehung zur nächsten Teilung initiiert werden.

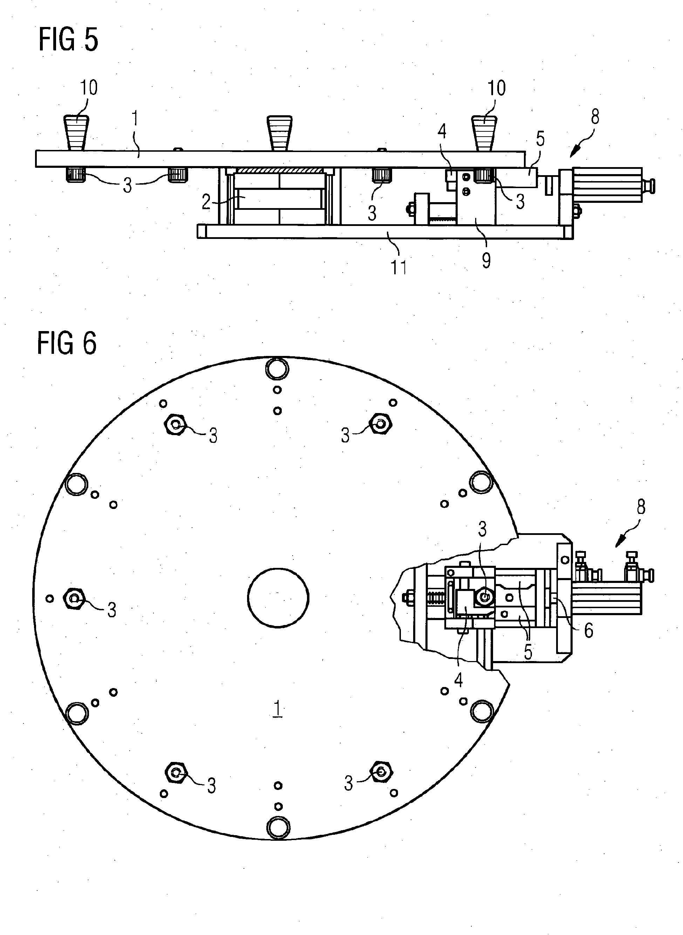

Die Figuren 5 und 6 können gemeinsam betrachtet werden. Dargestellt ist insbesondere der Vorgang des Abbremsens oder Einfangens einer Kurvenrolle 3 in der Indexiereinheit 8 in Verbindung mit dem Initiator 9. Der Drehteller 1 ist wiederum über die Lagerung und den Freilauf 2 gemeinsam mit der Indexiereinheit 8 auf einem gemeinsamen Träger 11 positioniert. Der Drehteller 1 ist in Figur 6 teilweise gebrochen dargestellt, wobei auch die Indexiereinheit 8 zur Betrachtung der inneren Bestandteile aufgebrochen ist. Entsprechend Figur 5 ist die Kurvenrolle 3, die zur Indexierung in die Indexiereinheit 8 bzw. einem Initiator 9 zur Anschlagüberwachung eingefahren ist, abgebremst. Damit ist die Kurvenrolle 3 durch den Anschlag 4 in der geschnittenen Seitenansicht entsprechend Figur 5 verdeckt. Im Anschluss daran wird durch Ausfahren des Zylinders 6 das Zentrierelement 5 über die Kurvenrolle 3 geschoben, so dass diese zentriert positioniert und fixiert ist. Dazu wird der Anschlag 4 radial nach innen verschoben. Es ergibt sich der Zustand entsprechend Figur 1.

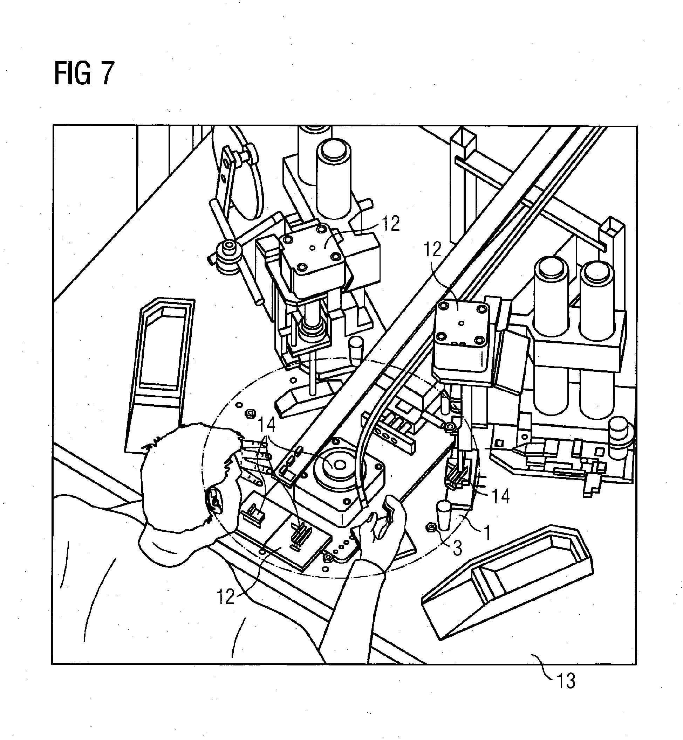

In Figur 7 wird ein Beispiel für den Einsatz eines Drehtellers 1 dargestellt. Dieses Beispiel zeigt ein hybrides Arbeitssystem 13 mit einem Drehteller 1, der manuell auslösbar ist und in eine Drehbewegung versetzt werden kann. Zum Transport und zur Indexierung von Bauteilen dient dieser Drehteller 1 als Transportmittel und wirkt mit einer Indexiereinheit zusammen. Der in Figur 7 dargestellte Drehteller 1 ist als drehbarer Auflageteller ausgeführt um Bauteile aufzunehmen. Weiterhin sind Lagerung und Freilauf 2 skizziert. Kurvenrollen 3 sind teilweise sichtbar. Die Gesamtansicht zeigt drei Arbeitsstationen 12, die in einem Arbeitssystem 13 integriert sind, welches wiederum mehrfach hintereinander in Serie geschaltet werden kann. Der in Figur 7 dargestellte Drehteller 1 ist mit drei Kurvenrollen 3 ausgestattet. Die Teilung am Drehteller beträgt 120°. Arbeitsmittel 14 in den jeweiligen Arbeitsstationen 12 können Einlegestationen zur Bestückung mit Bauteilen sowie automatisierte Löt- oder Schweißstationen sein.

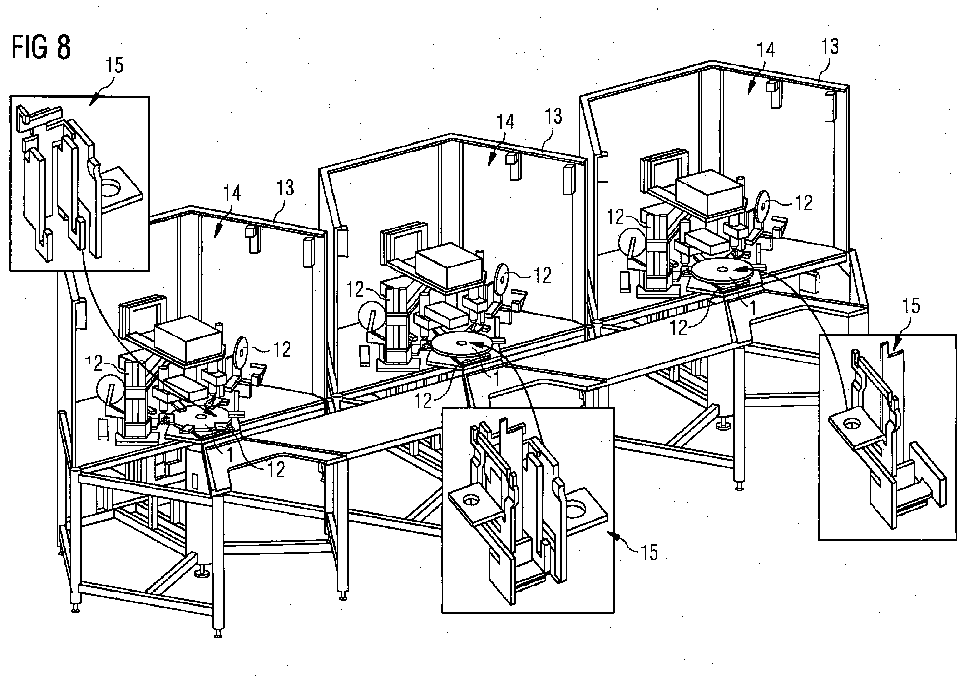

Die Figur 8 zeigt mehrere in Reihe geschaltete Arbeitssysteme 13, wobei in jedem einzelnen Arbeitssystem 13 ein Drehteller 1 eingesetzt wird. Unterschiedliche Bauteile 15 können an den drei Arbeitsstationen 12 in jedem Arbeitssystem 13 mit unterschiedlichen Arbeitsmitteln 14 bearbeitet werden. Der Materialfluss innerhalb der Arbeitssysteme 13 ist durch die dargestellten Pfeile skizziert.

In den in Figur 8 dargestellten, drei nebeneinander positionierten Arbeitssystemen 13 kann beispielsweise im ersten Arbeitssystem 13 ein Grundbauteil mit einem Anschluss versehen werden, ein Heizleiter in eine passende Form gebogen werden sowie eine Litze an den Heizleiter angebracht werden. Im zweiten Arbeitssystem 13 könnten beispielsweise ein Bimetall sowie ein Justierblech in eine bestimmte Zone montiert werden. Und in einem dritten Arbeitssystem 13 könnte die Montage der Litze am Bimetall erfolgen.

Die Erfindung liefert ein hybrides Arbeitssystem, wobei die zweckmäßige Initiierung der Drehbewegung eines Drehtellers in Verbindung mit einer automatischen Indexierung zu einer optimierten Mensch-Maschine-Schnittstelle führt. Durch die Indexiereinheit und die Kurvenrollen am Drehteller wird der Drehteller je nach Teilung bzw. je nach Werkstückträgeraufnahmen, die sich auf dem Drehteller befinden, automatisch in der Indexiereinheit durch eine Kurvenrolle eingefangen, gedämpft und zentriert. Dazu ist in der Drehtellerlagerung ein Freilauf notwendig, der eine Drehtellerbewegung nach dem Einfahren in die Dämpfung entgegen der Drehrichtung verändert.

Wird die Drehbewegung manuell initiiert, so ist es sinnvoll, eine Zweihandauslösung zur Sicherheit einzusetzen oder einen Fußtaster zu verwenden. Die Sicherheitsmaßnahmen wären für diese Variante relativ umfangreich. Der entscheidende Vorteil der Erfindung besteht im Vergleich zum Stand der Technik darin, dass die manuell über einen Betätigungsknopf am Auflageteller ausgelöste Drehbewegung automatisch indexiert und nach Fertigmeldung der automatischen Arbeitsstationen wieder freigegeben wird.

## Patentansprüche

1. Drehteller (1) zur Aufnahme, zum Transport und zur Fixierung von Bauteilen, aufweisend folgende Elemente:
- mindestens einen drehbar gelagerten Auflageteller mit Freilauf (2) und mit mindestens einer Kurvenrolle (3),
- mindestens eine Indexiereinheit (8) mit einem Zentrierelement (5) zur automatischen Aufnahme und Zentrierung der mindestens einen Kurvenrolle (3),
wobei eine Teilung auf dem Auflageteller durch Kurvenrollen markiert ist, so dass dieser in gleichmäßige Segmente unterteilt ist und über die mindestens eine Kurvenrolle (3) mit der Indexiereinheit (8) zusammenwirkt und nach Bearbeitung der Bauteile an einem entsprechenden Arbeitssystem (13) für die nächste Drehbewegung freigegeben ist,
**dadurch gekennzeichnet, dass**
die Indexiereinheit (8) einen Anschlag (4) und mindestens ein Dämpfungselement (7) zum Dämpfen der mindestens einen Kurvenrolle (3) aufweist.

2. Drehteller (1) nach Anspruch 1, **dadurch gekennzeichnet, dass** die Indexiereinheit (8) einen Initiator (9) zur Überwachung des Anschlags (4) aufweist.

3. Drehteller (1) nach Anspruch 1 oder 2, **dadurch gekennzeichnet, dass** der Drehteller (1) mittels einer Lagerung und dem Freilauf (2) sowie die Indexiereinheit (8) auf einem gemeinsamen Träger (11) befestigt sind, sodass der Drehteller (1) relativ zur Indexiereinheit (8) drehbar ist und Kurvenrollen bei einer Drehung des Drehtellers (1) durch die Indexiereinheit (8) durchführbar sind.

4. Drehteller (1) nach Anspruch 1, **dadurch gekennzeichnet, dass** die Achse des Drehtellers (1) senkrecht ausgerichtet ist.

5. Drehteller (1) nach Anspruch 1, **dadurch gekennzeichnet, dass** die Indexiereinheit (8) Mittel aufweist zum Auffangen der mindestens einen Kurvenrolle (3).

6. Drehteller (1) nach Anspruch 4, **dadurch gekennzeichnet, dass** die Indexiereinheit (8) einen beweglichen Anschlag aufweist zur Freigabe des Drehtellers (1) nach Fertigstellung der Bearbeitung am entsprechenden Arbeitssystem (13).

7. Verfahren zum Betrieb eines Drehtellers (1) nach einem der Ansprüche 1 - 5 zur Drehung des Drehtellers (1) um eine vorgegebene Teilung am Drehteller (1), bestehend aus folgenden Schritten:
- Initialisieren der Drehbewegung des Drehtellers (1) durch Lösen des Kraftschlusses zwischen Anschlag (4) und mindestens einer in einer Indexiereinheit (8) befindlichen Kurvenrolle (3),
- Einfahren der mindestens einen Kurvenrolle (3) in der Indexiereinheit (8),
- Abbremsen der mindestens einen Kurvenrolle (3) mittels eines gefederten Anschlags (4),
- Zentrierung der in der Indexiereinheit (8) befindlichen mindestens einen Kurvenrolle (3) mittels eines Zentrierelements (5),
- Freigabe der in der Indexiereinheit (8) befindlichen mindestens einen Kurvenrolle (3) nach Beendigung der Bearbeitung von Bauteilen an einem Arbeitssystem (13), für die nächste Drehbewegung.

8. Verfahren nach Anspruch 7, **dadurch gekennzeichnet, dass** der Anschlag (4) durch ein Dämpfungselement (7), welches relativ zum Anschlag (4) der mindestens einen Kurvenrolle (3) gegenüber liegt, ein gedämpftes Abbremsen einer in die Indexiereinheit (8) einlaufenden mindestens einen Kurvenrolle (3) ermöglicht.

9. Verfahren nach Anspruch 7 oder 8, **dadurch gekennzeichnet, dass** die mindestens eine Kurvenrolle (3) in einer zentrierten Position fixiert wird und der Drehteller (1) positioniert ist.

10. Verfahren nach Anspruch 7, 8 oder 9, **dadurch gekennzeichnet, dass** durch den Freilauf (2) in der Drehtellerlagerung ein Zurückdrehen des Auflagetellers über das Dämpfungselement (7) verhindert wird.

11. Verwendung eines Drehtellers (1) nach einem der Ansprüche 1-6 zum Einsatz in Verbindung mit automatisierten Arbeitsstationen (12) zum halb- und vollautomatischen Bearbeiten von Bauteilen.

12. Verwendung nach Anspruch 11, **dadurch gekennzeichnet, dass** mehrere Arbeitsstationen (12) mit jeweils einem Drehteller (1) zu einem Arbeitssystem (13) zusammengestellt sind, wobei mehrere Arbeitssysteme (13) nebeneinander mit übergreifendem Materialfluss etabliert sind.

## Claims

1. Turntable (1) for receiving, transporting and fixing components, comprising the following elements:
- at least one rotatably mounted supporting plate with a freewheeling mechanism (2) and with at least one cam roller (3),
- at least one indexing unit (8) with a centring element (5) for automatically receiving and centring the at least one cam roller (3),
a graduation being marked on the supporting plate by the cam rollers, so that said plate is divided into equal segments and interacts with the indexing unit (8) by means of the at least one cam roller (3) and, after the components have been machined at a corresponding working system (13), is released for the next turning movement, **characterized in that**
the indexing unit (8) has a stop (4) and at least one damping element (7) for damping the at least one cam roller (3).

2. Turntable (1) according to Claim 1, **characterized in that** the indexing unit (8) has an initiator (9) for monitoring the stop (4).

3. Turntable (1) according to Claim 1 or 2, **characterized in that** the turntable (1), by means of a mounting and the freewheeling mechanism (2), and the indexing unit (8) are fastened on a common carrier (11), so that the turntable (1) is rotatable in relation to the indexing unit (8) and cam rollers can be made to pass through the indexing unit (8) during a rotation of the turntable (1).

4. Turntable (1) according to Claim 1, **characterized in that** the axis of the turntable (1) is aligned vertically.

5. Turntable (1) according to Claim 1, **characterized in that** the indexing unit (8) has means for intercepting the at least one cam roller (3).

6. Turntable (1) according to Claim 4, **characterized in that** the indexing unit (8) has a movable stop for releasing the turntable (1) after completion of the machining at the corresponding working system (13).

7. Method for operating a turntable (1) according to one of Claims 1-5 for turning the turntable (1) by a prescribed division on the turntable (1), comprising the following steps:
- initializing the turning movement of the turntable (1) by ending the frictional connection between the stop (4) and at least one cam roller (3) located in an indexing unit (8),
- making the at least one cam roller (3) enter the indexing unit (8),
- slowing down the at least one cam roller (3) by means of a sprung stop (4),
- centring the at least one cam roller (3) located in the indexing unit (8) by means of a centring element (5),
- after completion of the machining of components at a working system (13), releasing the at least one cam roller (3) located in the indexing unit (8) for the next turning movement.

8. Method according to Claim 7, **characterized in that** the stop (4) makes it possible for at least one cam roller (3) that has been made to enter the indexing unit (8) to be slowed down in a damped manner by a damping element (7), which lies opposite in relation to the stop (4) of the at least one cam roller (3).

9. Method according to Claim 7 or 8, **characterized in that** the at least one cam roller (3) is fixed in a centred position and the turntable (1) is positioned.

10. Method according to Claim 7, 8 or 9, **characterized in that** the freewheeling mechanism (2) in the turntable mounting has the effect of preventing reverse turning of the supporting plate by means of the damping element (7).

11. Use of a turntable (1) according to one of Claims 1-6 for acting together with automated workstations (12) for the semiautomatic and fully automatic machining of components.

12. Use according to Claim 11, **characterized in that** multiple workstations (12) each with a turntable (1) are grouped together to form a working system (13), multiple working systems (13) being set up next to one another with a commonly shared material flow.

## Revendications

1. Plateau tournant (1) pour la réception, le transport et la fixation de pièces, présentant les éléments suivants :
- au moins un plateau porte-pièce monté de manière à pouvoir tourner avec une roue libre (2) et au moins un galet de came (3),
- au moins une unité d'indexage (8) avec un élément de centrage (5) pour la réception et le centrage automatiques de l'au moins un galet de came (3),
dans lequel une segmentation est matérialisée sur le plateau porte-pièce par le biais des galets de came, de sorte que le plateau est subdivisé en segments identiques et coopère avec l'unité d'indexage (8) par le biais de l'au moins un galet de came (3) et est libéré après la manipulation des pièces au niveau d'un système de travail correspondant (13) pour le mouvement de rotation suivant,
**caractérisé en ce que**
l'unité d'indexage (8) présente une butée (4) et au moins un élément d'amortissement (7) pour l'amortissement de l'au moins un galet de came (3).

2. Plateau tournant (1) selon la revendication 1, **caractérisé en ce que** l'unité d'indexage (8) présente un initiateur (9) pour le contrôle de la butée (4).

3. Plateau tournant (1) selon la revendication 1 ou 2, **caractérisé en ce que** le plateau tournant (1) au moyen d'une disposition et de la roue libre (2) ainsi que l'unité d'indexage (8) sont fixés sur un support commun (11), de sorte que le plateau tournant (1) peut tourner par rapport à l'unité d'indexage (8) et les galets de came sont actionnables lors d'une rotation du plateau tournant (1) par le biais de l'unité d'indexage (8).

4. Plateau tournant (1) selon la revendication 1, **caractérisé en ce que** l'axe du plateau tournant (1) a une orientation verticale.

5. Plateau tournant (1) selon la revendication 1, **caractérisé en ce que** l'unité d'indexage (8) présente des moyens pour recueillir l'au moins un galet de came (3).

6. Plateau tournant (1) selon la revendication 4, **caractérisé en ce que** l'unité d'indexage (8) présente une butée mobile pour la libération du plateau tournant (1) une fois la manipulation terminée au niveau du système de travail correspondant (13).

7. Procédé d'exploitation d'un plateau tournant (1) selon l'une des revendications 1-5, pour la rotation du plateau tournant (1) autour d'une segmentation prédéterminée au niveau du plateau tournant (1), comprenant les étapes suivantes :
- initialisation du mouvement de rotation du plateau tournant (1) par le biais du déclenchement de la complémentarité de forces entre la butée (4) et au moins un galet de came (3) qui se trouve dans une unité d'indexage (8),
- introduction de l'au moins un galet de came (3) dans l'unité d'indexage (8),
- freinage de l'au moins un galet de came (3) au moyen d'une butée à ressort (4),
- centrage de l'au moins un galet de came (3) qui se trouve dans l'unité d'indexage (8) au moyen d'un élément de centrage (5),
- libération de l'au moins un galet de came (3) qui se trouve dans l'unité d'indexage (8) une fois la manipulation des pièces terminée au niveau d'un système de travail (13), pour le mouvement de rotation suivant.

8. Procédé selon la revendication 7, **caractérisé en ce que** la butée (4) rend possible par le biais d'un élément d'amortissement (7), lequel par rapport à la butée (4) fait face à l'au moins un galet de came (3), un freinage amorti d'au moins un galet de came (3) entrant dans l'unité d'indexage (8).

9. Procédé selon la revendication 7 ou 8, **caractérisé en ce que** l'au moins un galet de came (3) est fixé dans une position centrée et le plateau tournant (1) est positionné.

10. Procédé selon la revendication 7, 8 ou 9, **caractérisé en ce que** par le biais de la roue libre (2) dans la disposition du plateau tournant une rotation du plateau porte-pièce en sens inverse est empêchée par le biais de l'élément d'amortissement (7).

11. Utilisation d'un plateau tournant (1) selon l'une des revendications 1-6, pour la mise en oeuvre en relation avec des postes de travail automatisés (12) d'une manipulation semi- ou entièrement automatique de pièces.

12. Utilisation selon la revendication 11, **caractérisée en ce que** plusieurs postes de travail (12) sont équipés respectivement d'un plateau tournant (1) pour un système de travail (13), plusieurs systèmes de travail (13) étant établis les uns à côté des autres avec un flux de matériaux global.
